# EUROPEAN PATENT APPLICATION

(11) **EP 3 335 788 A1**
(43) Date of publication of application: **20.06.2018**
(21) Application number: 16382601.9
(22) Date of filing: 15.12.2016
(51) Int. Cl.: B01J 20/22, B01J 20/30

(54) **A PROCESS FOR THE COVALENT POST-SYNTHETIC MODIFICATION OF METAL ORGANIC FRAMEWORKS**

(71) Applicant: Fundació Institut Català de Nanociència i Nanotecnologia, 08193 Bellaterra (ES); Institució Catalana de Recerca i Estudis Avançats, 08010 Barcelona (ES)
(72) Inventor: Maspoch Comamala, Daniel, 08197 VALLDOREIX (ES); Imaz, Inhar, 08037 BARCELONA (ES); Garzón Tovar, Luís Carlos, 08290 CERDANYOLA DEL VALLÈS (ES); Rodríguez Hermida, Sabina, 08009 BARCELONA (ES)
(74) Representative: ZBM Patents - Zea, Barlocci & Markvardsen

(57) **Abstract**

The present invention refers to a process for the covalent post-synthetic modification of metal organic frameworks (MOFs), said process comprising: (a) spray drying a MOF comprising functional groups and a reagent in the presence of a solvent under conditions appropriate for forming a covalent bond between the functional groups of the MOF and the reagent, and (b) collecting the modified MOF.

## Description

### Technical Field

The present invention is related to the field of materials chemistry, particularly, metal organic chemistry. The invention provides a process for the covalent post-synthetic modification of metal organic frameworks.

### Background Art

Metal organic frameworks, also termed MOFs, have attracted much attention over the past decades due to their potential applications, such as in gas sorption and storage, catalysis, drug delivery and gas separation. MOFs are composed of two major components: a metal ion or cluster of metal ions and an organic molecule that plays the role of a ligand. The organic units are typically di-, tri- or polydentate ligands. The choice of metal and organic ligand has significant effects on the structure and properties of the MOF. For example, the metal coordination preference influences the size and shape of pores by dictating how many ligands can bind to the metal and in which orientation.

One of the main characteristics of MOFs is the ability to tailor their chemical functionality and/or pore surface chemistry, either by pre- or post-synthetic modification of the organic linker. Covalent post-synthetic modification (PSM) involves an organic reaction carried out on the organic linker while maintaining the MOF integrity.

To date, there are many studies based on the PSM of MOFs involving linkers with different functional groups. Among them, the most common reaction involves a Schiff-base condensation between an amine and an aldehyde to form an imine via water elimination. Using this chemistry, PSM of the 2-aminoterephthalate (NH2-bdc) linker of UiO-66-NH₂ has been widely studied. For example, Lu et al. (*J. Mol. Catal. A: Chem.* 2015, v. 407, p. 53) showed the successful PSM of UiO-66-NH₂ with salicylaldehyde by heating a mixture of both species in acetonitrile at 40 °C for three days. Once functionalized, they further immobilized Cu(II) salts on the incorporated imine moiety, and used the resulting framework as an efficient catalyst for the aerobic oxidation of alcohols. A similar strategy was also followed to synthesize efficient catalysts for the epoxidation of olefins, the hydrogenation of aromatics, and the reductive amination of aldehydes. In these cases, UiO-66-NH₂ was post-synthetically modified with salicylaldehyde, 2-pyridinecarboxylaldehyde, 4-pyridinecarboxylaldehyde, and 6-((diisopropylamino)methyl)picolinaldehyde followed by the immobilization of Mo(VI) and Ir(I). Also, other amino-terminated MOFs such as IRMOF-3 and Cr-MIL-101-NH₂ have been used for the development of efficient catalysts. Here, both MOFs were first reacted with pyridine-based aldehydes and then with Cu(I) and Co(II) salts to create heterogeneous catalysts for the synthesis of different 2-aminobenzothiazoles and the aerobic epoxidation of olefins, respectively.

Morris et al. (J. Am. Chem. Soc. 2008, v. 130, p. 12626) also reported the use of the Schiff-base condensation reaction to post-synthetically functionalize aldehyde-terminated MOFs. They reacted ZIF-90 with ethanolamine yielding the imine-derivative non-porous ZIF-92. Following the same type of chemistry, ZIF-90 was recently labelled with an Alexa Fluor dye, whereas a mixed ZIF-8-90 sample was post-functionalized with ethylenediamine. This latter PSM allowed the introduction of an aliphatic amine-terminated group to ZIF-8-90, enhancing its CO₂ sorption capacity. In a more recent study, a superhydrophobic ZIF-90 exhibiting a water contact angle value of around 152° was prepared by reacting it with a polyfluorinated amine.

In general, the synthetic conditions for the PSM of MOFs require long reactions times (from 1 to 3 days) and high temperatures. To overcome these limitations, some advances have been done on developing alternative methods for the PSM of MOFs. One of them is based on the PSM of IRMOF-3 and UiO-66-NH₂ by vapour diffusion (Servalli et al, Chem. Commun. 2012, v. 48, p. 1904). This method allowed the PSM of both MOFs with high conversion efficiency after heating the solvent-free MOFs with the corresponding aldehyde at 100-120 °C using a vacuum system for 16 h. While being an improvement over previous methods, the vapour diffusion method still requires long reaction times. Further, the need of a vacuum systhem difficults the up-scaling of the PSM method for industrial application.

There is a need to provide alternative methods for the PSM of MOFs that overcome the disadvantages mentioned above.

### Summary of Invention

The inventors have developed an alternative process for performing covalent post-synthetic modification of MOFs which comprises spray drying a MOF and a reagent under conditions appropriate for forming a covalent bond.

A first aspect of the invention thus provides a process for the covalent post-synthetic modification of metal organic frameworks (MOFs), said process comprising: (a) spray drying a MOF comprising functional groups and a reagent in the presence of a solvent under conditions appropriate for forming a covalent bond between the functional groups of the MOF and the reagent, and (b) collecting the modified MOF.

The new process requires very short reaction times (sometimes as short as 1 or 2 seconds), mild conditions and is scalable to produce large quantities of modified MOFs. Despite such short reaction times it has been surprisingly found that the reagent effectively diffuses into the pores reacting with the MOF's functional groups to form a covalent bond with high conversion efficiency. Further, it has been found that by using the process of the invention, covalent reactions between reagents in different states of matter, i.e. solid-liquid reactions (the MOF is in solid state while the reagent is in liquid state), take place with surprisingly high efficiency.

Advantageously, the process of the invention allows for obtaining modified MOFs in continuous flow. The MOF and the reagent are continuously fed (sprayed) into de spray dryer where the the covalent reaction and the drying of the obtained modified MOF take place simultaneously in a very short time (from 0.1 to 30 s) yielding a dry modified MOF. The dry modified MOF is obtained as a powder. The whole process may be continuous by installing a continuous unloading system for collecting the modified MOF from the spray dryer. The method is also convenient for large scale industrial production in that it makes use of regular industrial equipment. Importantly, the dry modified MOF maintains the integrity (crystallinity and morphology) of the original MOF. This is relevant in terms of functionallity. It is noted that collapse of the crystal structure of the MOF is undesirable and to date has been a mayor drawback for PSM of MOFs.

Altogether, the process is efficient, scalable, versatile, clean, quick, economical and environmentally friendly.

### Brief Description of Drawings

Fig. 1: Illustration of the covalent PSM performed in a) UiO-66-NH₂ and b) ZIF-90 under spray drying conditions.
Fig. 2: FESEM images of a) UiO-66-NH₂, b) UiO-66-NH₂ after spray drying process, c) (UiO-66-4PC)₃, d) (UiO-66-4PC)₅, e) (UiO-66-4PC)₁₀, f) (UiO-66-4PC)₁₅, g) (UiO-66-2PC)₃, h) (UiO-66-2PC)₅, i) (UiO-66-2PC)₁₀, j) (UiO-66-2PC)₁₅, k) (UiO-66-sal)₃, I) (UiO-66-Sal)₅, m) (UiO-66-Sal)₁₀ and n) (UiO-66-Sal)₁₅. Scale bar: 5 µm (a-n).
Fig. 3: a) ¹³C MAS-NMR specta of (UiO-66-2PC)₁₅ (2) and UiO-66-NH₂ (1). The signal of CH=N imine group is highlighted with an asterisk (*).X axis represents chemical shift (ppm). b) XRPD patterns of simulated UiO-66-NH₂ (1) and activated UiO-66-NH₂ (2), (UiO-66-2PC)₁₅ (3), (UiO-66-4PC)₁₅ (4) and (UiO-66-Sal)₁₅ (5).
Fig. 4: FESEM images of a) ZIF-90, b) (ZIF-90-BA)₃, c) (ZIF-90-BA)₁₀, d) (ZIF-90-BA)₁₅. Scale bar: 200 nm (a-d).
Fig. 5: A) XRPD patterns of ZIF-90 (2) and (ZIF-90-BA)₃ (3), (ZIF-90-BA)₁₀ (4) and (ZIF-90-BA)₁₅ (5), as compared to the simulated powder pattern for the crystal structure of ZIF-90 (1). B) IR spectra of ZIF-90 (1), (ZIF-90-BA)₃ (2), (ZIF-90-BA)₁₀ (3) and (ZIF-90-BA)₁₅ (4), highlighting the aliphatic C-H and imine C=N vibrational bands with an asterisk (*). X axis represents wavenumber (cm⁻¹). C) ¹³C MAS-NMR spectra of ZIF-90 (1) and (ZIF-90-BA)₁₅ (2), where the peaks corresponding to the butyl chains are highlighted with an asterisk (*). X axis represents chemical shift (ppm).
Fig. 6: ¹H-NMR spectrum of the digested (ZIF-90-BA)₁₅ in CD₃CO₂D. X axis represents chemical shift (ppm).
Fig. 7: Schematic representation of the PSM of ZIF-90 with hexamethylenediamine.
Fig. 8: FESEM images of a) ZIF-90 and b) (ZIF-90-HMDA)₅. Scale bars: 200 nm (a-b).
Fig. 9: XRPD patterns of the simulated ZIF-90 (1), as-synthesized ZIF-90 (2) and (ZIF-90-HMDA)₅ (3).
Fig. 10: IR spectra of ZIF-90 (1) and (ZIF-90-HMDA)₅ (2), highlighting the aliphatic C-H and imine C=N vibrational bands with an asterisk (*). X axis represents wavenumber (cm⁻¹).
Fig. 11:) ¹³C MAS-NMR spectra of ZIF-90 (1) and (ZIF-90-HMDA)₅ (2), where the peaks at the alkyl region are highlighted with an asterisk (*). X axis represents chemical shift (ppm)
Fig. 12: ¹H NMR spectrum of the digested (ZIF-90-HMDA)₅ in CD₃CO₂D. X axis represents chemical shift (ppm).
Fig. 13: N₂ sorption isotherms of ZIF-90 (1) and (ZIF-90-HMDA)₅ (2). X axis represents relative pressure (P/Po). Y axis represents volume adsorbed @ STP (cm³/g).

### Detailed description of the invention

The invention relates to a process for covalent PSM of MOFs which comprises spray drying a MOF comprising functional groups and a reagent in the presence of a solvent under conditions appropriate for forming a covalent bond between the functional groups of the MOF and the reagent. The modified MOF has the same crystallinity of the original MOF but posesses different functionality, modifying its absorption capabilities and/or opening the application of MOFs to a wide variety of fields such as catalysis or pharmacology.

"Metal Organic Frameworks", also termed MOFs, are crystalline compounds consisting of metal ions coordinated to often rigid organic molecules to form one-, two-, or three-dimensional structures that are highly porous.

The term "spraying" (also known as atomizing) refers to the process of forming a spray, which is a dynamic collection of drops dispersed in a gas. A "spray dryer" is a device well known in the state of the art where a liquid input stream is sprayed in small droplets through a nozzle (or atomizer) into a hot gas stream.

"Functional group" is generally a specific group (moiety) of atoms or bonds within molecules that are responsible for the characteristic chemical reactions of those molecules. In the sense of the present invention the "functional group" is comprised in the organic linker of the MOF and is susceptible of forming a covalent bond with a reagent.

"Dry modified MOF" is understood as a modified MOF which is substantially free of free solvent,. By "free solvent" is understood the solvent that does not form part of the MOF structure . By "substantially free" of free solvent is understood an amount equal to or lower than 5% w/w of solvent with respect to the total weight, preferably, equal to or lower than 1 % w/w of solvent, more preferably free of solvent. This does not exclude, however, that solvent molecules may be adsorbed inside the modified MOF pores (adsorbed solvent).

The present process is very efficient, achieving high conversion efficiency for the desired post-synthetic reaction, i.e. for the formation of a covalent bond between the MOF and the reagent. The term "conversion efficiency" refers to the molar % of functional groups of the MOF that effectively form a covalent bond with the reagent, i.e. the molar % of functional groups of the MOF that are "converted". A good conversion efficiency in MOF PSMs is considered to be between 15 and 80% molar. Such conversion efficiencies are easily achieved by the process of the invention. The present process may achieve conversion efficiencies which are higher than those obtained by previous methods. For example, convertion rates above 40% molar may be achieved with the process of the invention and are highly desirable for particular applications. In general, conversion efficiency comprised from 10 to 90% molar, in particular from 15 to 90% molar, more particularly from 20 to 80% molar may be achieved with the process of the invention. It is surprising that such high conversion efficiencies may be obtained in short reaction times (i.e. reaction times comprised from 0.1 s to 30 s). Moreover, the process of the invention is tunable so as to achive a desired conversion efficiency which is appropriate for the desired application. This may be done modifying the reaction conditions (see below), for example, modifying the feed rate or the reagents ratio. Thus, low conversion efficiency, which may be desirable for certain applications, are also possible with the present process. In general, the conversion efficiency for the process of the invention is at least 10% molar, particularly at least 15% molar, more particularly at least 20% molar, more particularly at least 30% molar and more particularly at least 40% molar.

Any MOF may serve as original MOF to be modified by the process of the invention, regardless of its method of synthesis, as long as it contains a functional group susceptible of undergoing a covalent reaction with a reagent. The original MOF crystals have an average size below 30 µm. In some embodiments the average size of the original MOF crystals is below 20 µm, in particular below 1 µm or below 100 nm. In general the average size of the original MOF crystal is comprised from 10 nm to 30 µm, preferably from 10 nm to 10 µm, more preferably from 30 nm to 300 nm. In other particular embodiments the original MOF has been synthesized by spray drying as described in EP 2764004 or not published EP16382120. As used herein, the term "size" refers to a characteristic physical dimension. For example, if the MOF crystals are spherical or substantially spherical, the size of the crystals corresponds to the diameter of the sphere or the equivalent diameter of the quasi-sphere assimilated as a sphere. The state of the art provides appropriate techniques and equipments to calculate the diameter of particles. For example, the diameter can be measured using laser diffraction analysis. Alternatively, the size of the crystals may be calculated from their images, for example from SEM images, by hand or applying an appropriate imaging software such as Gatan microscopy suite software. When referring to a set of crystals as being of a particular size, it is contemplated that the set of crystals can have a distribution of sizes around the specified size. Thus, as used herein, a size of a set of crystals can refer to a mode of a distribution of sizes, such as a peak size of the distribution of sizes.

The functional group in the MOF is usually a primary amine or an aldehyde. Primary amine and aldehyde functional groups may be expressed, respectively, as -NH₂ and - CHO. The reagent may be selected from an anhydride [(RC(O))₂O], an isocyanate (R-N=C=O), a isothiocyanate (R-N=C=S), a phosgene (COCl₂), a thiophosgene (CSCl₂), an aldehyde (RCHO) and a primary amine (RNH₂). The covalent reaction between the primary amine or aldehyde functional group in the MOF and one of the above reagents results in the formation of an imine, an amide, an urea , a thiourea, an isocyanate or an isothiocyanate. Non-limmitative apropriate MOFs are UiO-66-NH₂, ZIF-90, MIL-101-NH₂, MIL-53-NH₂, IRMOF-3, UiO-67-NH₂, UiO-67-CHO and SIM-1. Non-limmitative apropriate reagents for the process of the invention are acetic anhydride, propionic anhydride, butyric anhydride, pentanoic anhydride, methylisocyanate, ethylisocyanate, propylisocyanate, pentylisocyanate, phenylisocyanate, methylisothiocyanate, ethylisothiocyanate, propylisothiocyanate, pentylisothiocyanate, phenylisothiocyanate, diphosgene, thiophosgene, 4-pyridinecarboxaldehyde, 2-pyridinecarboxaldehyde, salicylaldehyde, trimethylamine, butylamine and hexamethylenediamine.

The inventors have further found the conditions that are appropriate for forming a covalent bond between the amine or aldehyde functional group of the MOF and the above reagents by the process of the invention with good conversion efficiency (i.e. from 10 to 90% molar, preferably from 15 to 80% molar, more preferably from 30 to 70% molar). These conditions comprise: a temperature comprised from 60 to 200 °C, a molar ratio of amine or aldehyde functional group of the MOF to reagent comprised from 1:1 to 1:50 and a feed rate for spraying the MOF and the reagent comprised from 2 to 4.5 mL/min. It is very important to operate in these conditions for the covalent PSM to take place with good conversion efficiency and for maintaining the integrity (crystallinity) of the original MOF.

In a particular embodiment of the first aspect of the invention, the MOF to be modified comprises a functional group selected from the group consisting of a primary amine and an aldehyde; the reagent is selected from an anhydride, an isocyanate, a isothiocyanate, phosgene, thiophosgene an aldehyde and a primary amine; the conditions appropriate for forming a covalent bond between the amine or aldehyde functional group of the MOF and the reagent comprise a temperature comprised from 60 to 200 °C, a molar ratio of amine or aldehyde functional group to reagent comprised from 1:1 to 1:50 and a feed rate for spraying the MOF and the reagent comprised from 2 to 4.5 mL/min; and the collected modified MOF comprises a group which is an imine, an amide, an urea, a thiourea, an isocyanate or an isothiocyanate.

The process of the invention requires that the spray drying is done in the presence of a solvent. The term "solvent" relates to individual solvents and also to mixtures of different solvents. The solvent can be any aqueous or non-aqueous solvent. In certain embodiments of the invention, mixtures of two or more solvents are used. In a particular embodiment, the solvent is selected from the group consisting of CHCl₃, CH₂Cl₂, (C1-C4)-alcohol, tetrahydrofuran (THF), dimethyl formamide (DMF), N,N-diethylformamide (DEF), dimethyl sulfoxide (DMSO) and mixtures thereof. In particular embodiments, the solvent is selected from the group consisting of CHCl₃, CH₂Cl₂, methanol (MeOH), ethanol (EtOH), isopropanol and mixtures thereof. Apropriate mixtures are, for example MeOH/EtOH, CHCl₃/MeOH, CHCl₃/EtOH, EtOH/CH₂Cl₂ and CH₂Cl₂/ CHCl₃. In other particular embodiments the solvent is selected from ethanol, CHCl₃, CH₂Cl₂, and mixtures thereof.

The solvent or mixture of solvents is sprayed at the same time as the MOF and the reagent. In particular embodiments, a mixture comprising the MOF and the reagent in one or more solvents at room temperature is spray dryed at the conditions mentioned above which are appropriate for forming a covalent bond between the amine or aldehyde functional group of the MOF. The mixture to be sprayed contains the MOF in colloidal suspension, while the reagent is usually dissolved. In other embodiments, two mixtures, one containing the MOF and the one or more solvents and another containing the reagent and one or more solvents are sprayed through different nozzels or a three-fluid nozzle. Again the MOF is in colloidal suspension while the reagent is dissolved. Additionally, more solvent can be simultaneously sprayed through a different nozzle or a multi-fluid nozzle. The post-synthetic reaction usually takes place between the colloidal MOF which is ultimatelly a solid and the dissolved reagent in liquid state. Considering the short time in which the covalent reaction takes place within the spray dryer it is surprising that such high conversion efficiency (i.e. between 10 and 90% molar) are achieved for a solid-liquid reaction. As mentioned above, the covalent reaction and the drying of the product (the modified MOF) takes place simultaneously in the spray dryer, so that the modified MOF is obtained as a substantially dry product in the form of a powder, wherein the modified MOF maintains the crystallinity of the original MOF.

In some embodiments the conditions appropriate for forming a covalent bond between the amine or aldehyde functional group of the MOF and the reagent in the process of the invention comprise a temperature comprised from 80 to 150 °C, in particular from 100 to 130 °C. The temperature is the temperature inside the spray dryer. In other embodiments the conditions comprise a feed rate for spraying the MOF and the reagent comprised from from 1.5 to 4 mL/min, in particular from 3 to 3.5 mL/min. The "feed rate" refers to the volume of reagents being sprayed per unit of time and is expressed in mL/min. It gives an idea of the velocity at which the reagents are fed to the reaction. When the MOF and the reagent are sprayed through different nozzles the feed rate for each may be the same or it may be different. In other embodiments the conditions comprise a molar ratio of amine or aldehyde functional group of the MOF to reagent comprised from 1:3-1:40, in particular from 1:3 to 1:30. The "ratio" is understood as the proportion at which the functional groups of the MOF is present in the reaction relative to the reagent (functional group:reagent). "Molar ratio" represents the proportion of MOF to reagent when expressed in molar concentration. In particular embodiments the conditions comprise a temperature from 80 to 150 °C, a feed rate from 1.5 to 4 mL/min and a molar ratio is comprised from 1:3-1:40.

In other particular embodiments the conditions comprise a temperature from 100 to 130 °C, a feed rate from 3 to 3.5 mL/min and a molar ratio is comprised from 1:3-1:30 and the solvent is selected from the group consisting of CHCl₃, CH₂Cl₂, (C1-C4)-alcohol, THF, DMF, DEF, DMSO and mixtures thereof.

Among MOFs covalent post-synthetic reactions, the most common reaction involves a Schiff-base condensation between an amine and an aldehyde to form an imine via water elimination. Thus, in a particular embodiment of the invention the reagent is an aldehyde or an amine and the collected modified MOF comprises a group which is an imine. Particular conditions which are appropriate for forming the imine comprise a temperature comprised from 80 to 200 °C, a molar ratio of amine or aldehyde functional group of the MOF to reagent comprised from 1:1 to 1:30 and a feed rate comprised from 2 to 4.5 mL/min. The solvent is selected from (C1-C4) alcohol, DMF and mixtures thereof. An appropriate mixture is for example ethanol and methanol. In particular embodiments the solvent is selected from methanol, ethanol and isopropanol, for example ethanol.

In some embodiments the conditions appropriate for forming the imine comprise a temperature comprised from 100 to 150 °C, preferably from 115 to 135 °C. In other embodiments the conditions appropriate for forming an imine comprise a molar ratio of amine or aldehyde functional group of the MOF to reagent comprised from 1:2 to 1:20, preferably from 1:3 to 1:15, more preferably from 1:3 to 1:10. In other embodiments the conditions appropriate for forming an imine comprise a feed rate comprised from 2.5 to 3.5 mL/min, preferably from 3 to 3.5 mL/min, for example 3.2 mL/min. In particular embodiments the conditions to form an imine comprise a temperature comprised from 100 to 150 °C, a molar ratio of amine or aldehyde functional group of the MOF to reagent comprised from 1:2 to 1:20 and the feed rate is comprised from 2.5 to 3.5 mL/min. In other particular embodiments the conditions to form an imine comprise a temperature comprised from 110 to 130 °C, a molar ratio of amine or aldehyde functional group of the MOF to reagent comprised from 1:3 to 1:15 and the feed rate is comprised from 3 to 3.5 mL/min and the solvent is selected from metanol, ethanol, isopropanol and mixtures thereof.

In a particular embodiment the functional group in the MOF is a primary amine and the reagent is an aldehyde. The collected modified MOF comprises an imine. The particular conditions appropriate for forming this imine comprise a temperature comprised from 115 to 135 °C, a feed rate comprised from 3 to 3.5 and a molar ratio of primary amine to aldehyde comprised from 1:3 to 1:15. The same conditions are appropriate for the formation of an imine in another embodiment where the functional group in the MOF is an aldehyde and the reagent is a primary amine. These particular embodiments of the process of the invention allow for obtaining the modified MOF comprising an imine with a converion rate of at least 15% molar, in particular from 15 to 90% molar (for example 20%, 25%, 30%, 35%, 40%, 45%, 50%, 55% 60%, 65%, 70%, 75%, 80%, 85% molar) in a time comprised between 30 s and 10 min (for example 1 min, 2 min, 3 min, 4 min, 5 min, 6 min).

In general the reaction time of the proces of the invention is very short, from 0.1 s to 30 s. By "reaction time" it is understood the time elapsing from the moment that the starting materials (the original MOF and the reagent) are fed to the drying chamber to the moment the modified MOF (which comprises a new covalent bond) is dried. Usually a susbtantially dry modified MOF which retains the crystallinity of the original may be obtained in less than 30 s, or less than 15 s min, often less than 10 s and even less than 5 s, for example 1 or 2 s. This makes a huge difference with prior art methods which need several hours, or even days, for the reaction to take place. In particular embodiments the reaction time is comprised from 0.1 s to 30 s, or from 0.1 s to 20 s, or from 0.5 s to 15 s, or from 0.5 s to 10 s, or from 0.5 s to 5 s, or from 1 s to 4 s, for example 2 or 3 s.

Any regular spray dryer can be employed to produce dry crystalline MOFs according to the invention. Preferably, large industrial spray dryers are used. Such industrial spray dryers can produce very large quantities of modified MOFs according to the present process in surprisingly short times. Usually, air is employed as the hot gas stream, however, other gases can be employed, such as nitrogen. It is noted that the amount of modified MOF per unit of time that is obtained with the process of the invention is constrained by the spray dryer equipment. Thus, larger amounts of modified MOF may be obtained with big equipments that can feed large volumes of starting materials (original MOF and reagent) into the drying chamber. Usually, the starting materials are continuously fed into the spray dryer's chamber for a time sufficient to collect a certain amount of modified MOF product. Industrial spray dryers have large capacity drums for product collection. Preferably, the spray dryer drum is coupled to a powder-removing device. The device removes the formed MOF powder at regular intervals, making place for newly synthesized MOF, such that the production must not be regularly stopped to empty the drum.

The modified MOF crystals obtained by the process of the present invention have a high purity grade. Nevertheless it is typical for MOF products to be subjected to a purification step. Thus, in one embodiment, the process of the invention additionally comprises a purification step. Usually, this purification step comprises washing the MOF crystals with an appropriate solvent and drying. This purification step is also known as "extraction step" because it removes the solvent or other molecules that are retained in MOF pores (adsorbed solvent). By washing the porous material with an appropriate solvent, the new solvent molecules replace whatever molecules had remained in the pores and are subsequently removed by a gentle evaporation process. The solvent used for extraction can be identical to or different from that used for the post synthetic reaction. As nonlimiting suitable solvents for the purification or extraction step the following can be mentioned: water, methanol, ethanol, isopropanol, heptane, hexane, pentane, cyclohexane, alkenes, DMF, DEF, DMSO, dioxane, chloroform, dichloromethane, diethyl ether, acetonitrile, toluene, benzene, THF, chlorobenzene, ethylene glycol, and mixtures thereof. However, this purification step is not always required since the process of the invention may produce a sufficiently pure modified MOF.

The modified MOF obtainable by the process of the invention may be suitable for several applications, such as acting as catalysts in chemical industrial reactions, for gas absorption, for pollutant removal, for sensor technology, for separation and as vehicles for farmaceutically active ingredients, in particular for long term release of drugs.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

### Examples

### 1. Synthesis of UiO-66-NH2.

In a typical synthesis, 35 mL of HCl 37% was added to a solution 0.1 M of ZrCl₄ and 0.1 M of 2-aminoterephthalic acid (NH2-bdc) in 500 mL of dimethyl formamide (DMF). The resulting mixture was heated at 120 °C under stirring for 2 h. The obtained solid was collected by centrifugation, washed two times with 100 mL of DMF for 12 h at 120 °C, three times with 100 mL of absolute ethanol for 12 h at 60 °C. Finally, the resulting powder was dried at 85 °C overnight (yield = 75 % w/w).

### 2. Synthesis of ZIF-90.

In a typical synthesis, 0.27 mL of trimethylamine (1.96 mmol) was added to a solution 0.01 M of imidazole-2-carboxaldehyde (ICA) and 3.75 mM of Zn(NO₃)₂·6H₂O in 200 mL of DMF. The resulting mixture was stirred for 1 min at room temperature and then, 100 mL of ethanol was added. The particles were collected by centrifugation, washed five times with ethanol and one time with acetone, and finally dried at 85 °C overnight (yield = 70 %).

### 3. PSM of UiO-66-NH₂.

A series of ethanolic colloidal suspensions containing UiO-66-NH₂ [synthesized as described above; particle size = 245 nm ± 65 nm; obtained as pure phase as confirmed by X-ray powder diffraction (XRPD), scanning electron microscopy (SEM), N₂ sorption isotherm (S_{BET} = 914 m² g⁻¹) and ¹³C MAS-NMR] and the aldehydes 4-pyridinecarboxaldehyde (4PC), 2-pyridinecarboxaldehyde (2PC) and salicylaldehyde (Sal) were initially prepared at molar ratios of NH₂-bdc:aldehyde corresponding to 1:3, 1:5, 1:10 and 1:15. In particular, 144 µL, 240 µL, 480 µL or 720 µL of 4PC or 2PC were added to a dispersion of UiO-66-NH₂ (0.150 g, 0.085 mmol) in ethanol (15 mL). Alternatively, 160 µL, 240 µL, 540 µL or 810 µL of Sal were added to a dispersion of UiO-66-NH₂ (0.150 g, 0.085 mmol) in ethanol (15 mL). Each suspension was then spray-dried at an inlet temperature of 130 °C, feed rate of 3.0 mL min⁻¹ and a flow rate of 336 mL min⁻¹ using a Mini Spray Dryer B-290 (BUCHI Labortechnik; spray cap: 0.5-mm-hole). A yellow powder was collected after 5 min. The resulting solid was then dispersed in 20 mL of ethanol and precipitated by centrifugation. This process was repeated four times. The final product was washed one time with acetone and dried for 12 h at 85 °C. The different samples were named as (UiO-66-4PC)ₓ, (UiO-66-2PC)ₓ and (UiO-66-Sal)ₓ (where x is 3, 5, 10 and 15, depending on the equivalents of aldehyde used).

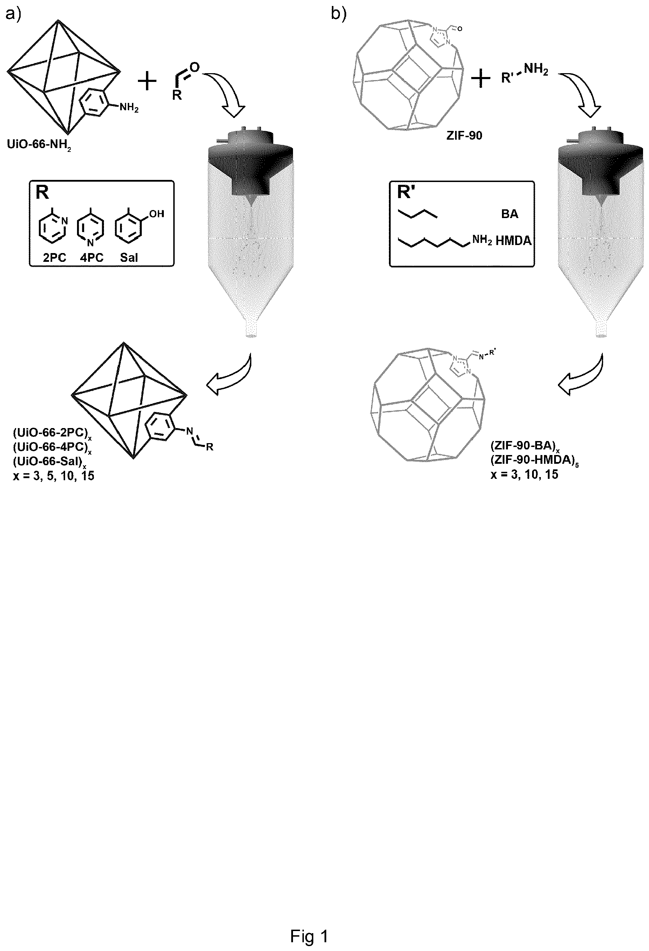

Schematic representation of the PSM of UiO-66-NH₂ with 2PC, 4PC and Sal is shown in figure 1.

### 4. PSM of ZIF-90.

Following the procedure applied for UiO-66-NH₂, an ethanolic suspension of ZIF-90 [synthesized as described above; particle size = 41 nm ± 9 nm; obtained as pure phase as confirmed by X-ray powder diffraction (XRPD), scanning electron microscopy (SEM), N₂ sorption isotherm (S_{BET} = 1070 m² g⁻¹) and ¹³C MAS-NMR] and the corresponding amine (butylamine (BA) or hexamethylenediamine (HMDA)) in ethanol was spray-dried under the same above-mentioned conditions. For the reaction with BA, 230 µL, 770 µL or 1200 µL of BA was added to a dispersion of ZIF-90 (0.100 g, 0.39 mmol) in 15 mL ethanol (molar ratios of ICA:BA corresponding to 1:3, 1:10 and 1:15). The collected powder was called (ZIF-90-BA)ₓ where x is the number of equivalents of BA. For the reaction with HMDA, 0.45 g (3.9 mmol) of HMDA was added to a dispersion of ZIF-90 (0.100 g, 0.39 mmol) in 15 mL ethanol (molar ratio of ICA:HMDA corresponding to 1:5). The resulting powder, called (ZIF-90-HMDA)₅, was also cleaned with ethanol five times and once with acetone, and dried at 85 °C for 12 h.

Schematic representation of the PSM of ZIF-90 with BA and HMDA is shown in figure 1.

### 5. Quantification protocol.

Samples were digested in strong acidic conditions and their ¹H-NMR spectra were collected to calculate the conversion of imine by the comparison of the integration of the characteristic signals of the corresponding reactants (amine and aldehyde). For the PSM of UiO-66-NH₂, 10 mg of activated sample, 0.6 mL of DMSO-d₆ and 120 µL of hydrofluoric acid HF 5 % were poured in a plastic NMR tube, and the mixture was sonicated for 1 h until a clear solution was obtained. For the PSM of ZIF-90, 10 mg of sample was digested with 20 µL of deuterium chloride DCI and 0.75 mL of DMSO-d₆.

### 6. Characterization of modified UiO-66-NH₂

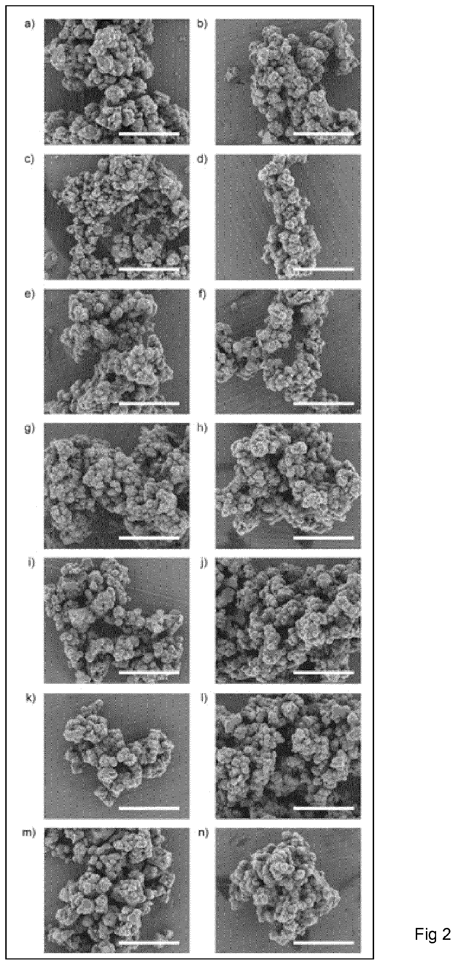

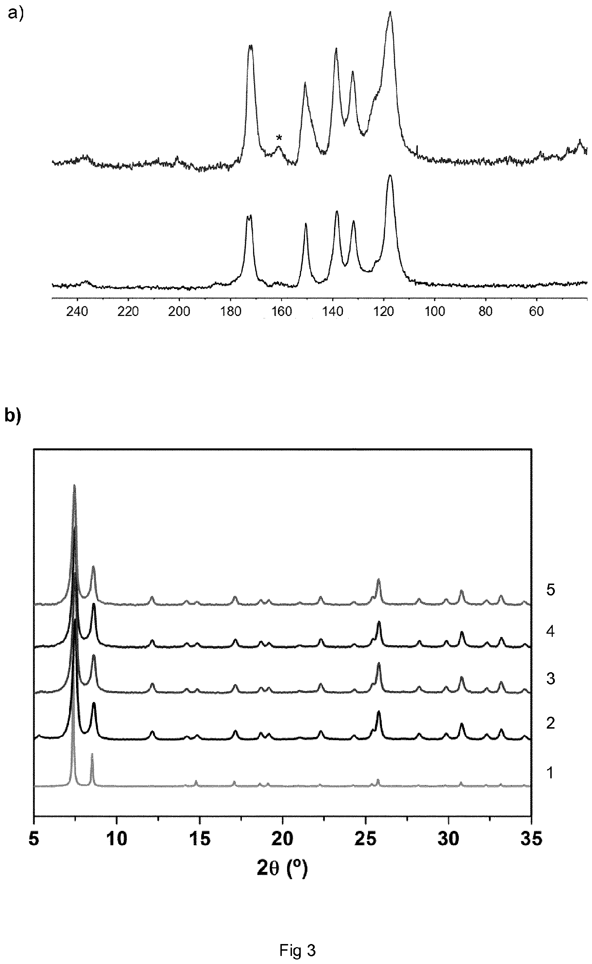

Field-emission scanning electron microscopy (FESEM) of all dried powders revealed that initial size and morphology of the parent UiO-66-NH₂ crystals did not change during the spray drying process (Fig. 2). XRPD indicated that all crystalline powders retain the crystallinity of the parent UiO-66-NH₂ MOF (Fig. 3b).

To confirm the PSM of UiO-66-NH₂ with the different aldehydes, ¹³C MAS-NMR on (UiO-66-2PC)₁₅, (UiO-66-4PC)₁₅ and (UiO-66-Sal)₁₅ was performed (Fig. 3a). All spectra showed the appearance of a new signal centred at 160-161 ppm, which was attributed to the carbon atom of the CH=N imine group. This peak is consistent with the ¹³C MAS-NMR signal associated to the imine carbon in previously reported post-functionalized UiOs.

The degree of post-synthetic conversion was analysed by first digesting the samples and then analysing the resulting solutions by ¹H-NMR. From the digestion under acidic conditions, the MOF framework is destroyed and the released imine molecules are hydrolysed forming the NH₂-bdc and the corresponding aldehyde. The conversion efficiency was then calculated by comparison of the integration of one peak at 7.36 ppm corresponding to NH₂-bdc and those peaks at 7.98, 8.52 and 7.52 ppm corresponding to 4PC, 2PC and Sal, respectively. Also note here that all samples were previously washed three times with ethanol and acetone, and then dried at 85 °C overnight before their digestion. This activation process ensures the removal of all non-reacted aldehyde molecules adsorbed in the pores of the MOFs during the SD process. Table 1 lists the degrees of conversion calculated for all synthesized samples. From this data, it was clear that the degree of conversion increases while increasing the equivalents of aldehyde used in the reaction. For example, the degree of conversion increased from 13 % to 20 % between (UiO-66-2PC)₃ and (UiO-66-2PC)₁₅. It is important to highlight here that the degree of conversion achieved by spray drying are higher than the ones reported for the PSM of UiO-66-NH₂ with the same aromatic aldehydes. The only exception was the conversion efficiency of 29 % reported by Bokhoven and co-workers for the formation of (UiO-66-Sal) via the vapour-phase method. However, this latter method is a non-continuous method, which requires vacuum and 16 h to achieve this conversion efficiency. Advantageously, the process of the invention does not require vacuum and the reaction time is much lower (5 min).

**Table 1. BET areas, pore volumes and % of conversion of UiO-66-NH₂, (UiO-66-2PC)ₓ, (UiO-66-4PC)ₓ and (UiO-66-Sal)ₓ.**

| MOF | x | S_{BET} (m²g⁻¹) | Pore vol. (cm³ g⁻¹)^{a} | Conversion (% molar)^{b} |
|---|---|---|---|---|
| UiO-66-NH₂ | -- | 914 | 0.3729 | -- |
| (UiO-66-2PC)ₓ | 3 | 699 | 0.2954 | 13 |
| | 5 | 625 | 0.2576 | 16 |
| | 10 | 586 | 0.2412 | 17 |
| | 15 | 516 | 0.2190 | 20 |
| (UiO-66-4PC)ₓ | 3 | 736 | 0.3056 | 9 |
| | 5 | 712 | 0.3015 | 16 |
| | 10 | 621 | 0.2652 | 18 |
| | 15 | 573 | 0.2441 | 20 |
| (UiO-66-Sal)ₓ | 3 | 761 | 0.3151 | 11 |
| | 5 | 709 | 0.2923 | 14 |
| | 10 | 665 | 0.2789 | 16 |
| | 15 | 616 | 0.2587 | 19 |

| | | | | |
|---|---|---|---|---|
| ^{a} Calculated at P/P₀ ≈ 0.4. ^{b} Calculated from ¹H-NMR spectra of the digested samples. | | | | |

N₂-sorption isotherms were finally measured at 77 K on all activated samples that were further degassed at 200 °C for 12 h under vacuum. It was found that the surface area and pore volumes decreased for the samples showing higher degree of conversion (Table 1). This trend was attributed to the fact that the new imine moieties grafted on the pores are bulkier than the amino group.

### 7. Characterization of modified ZIF-90

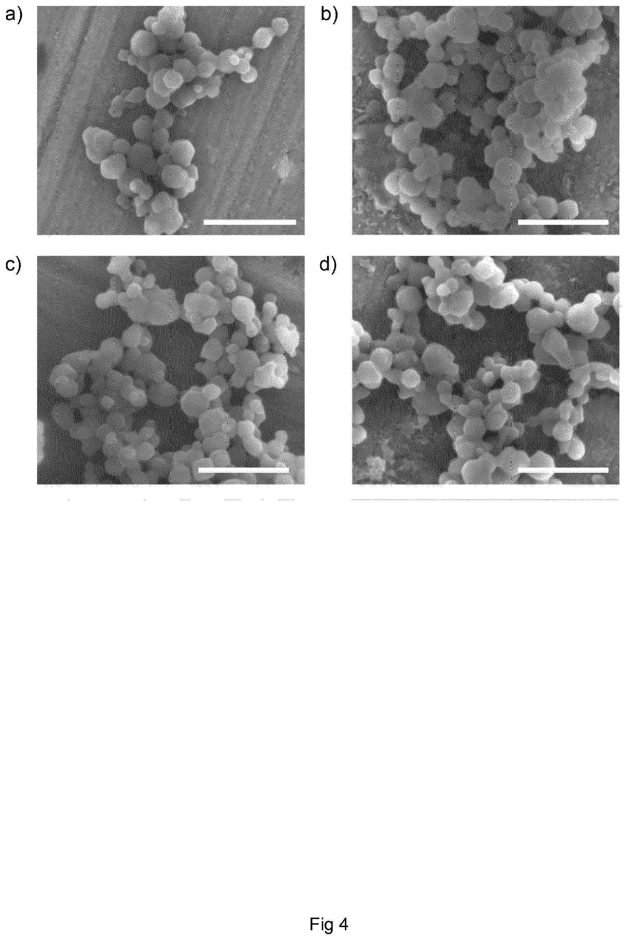

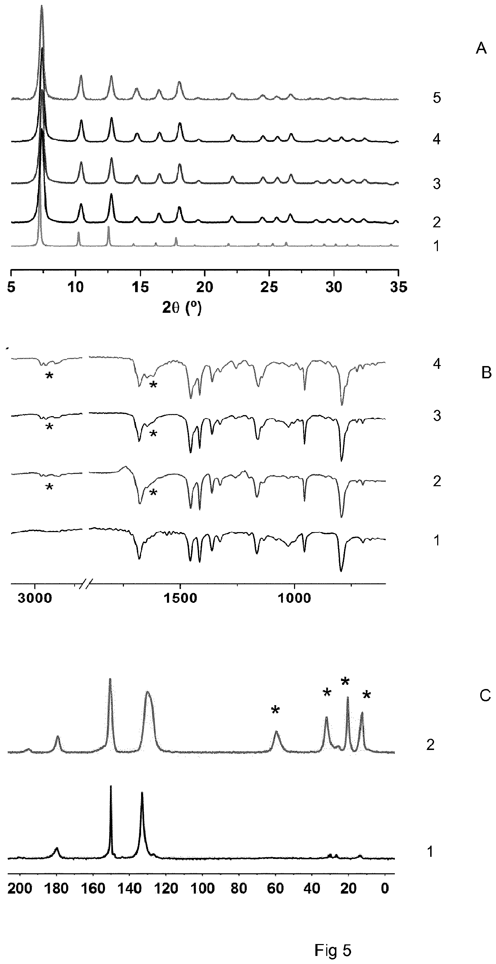

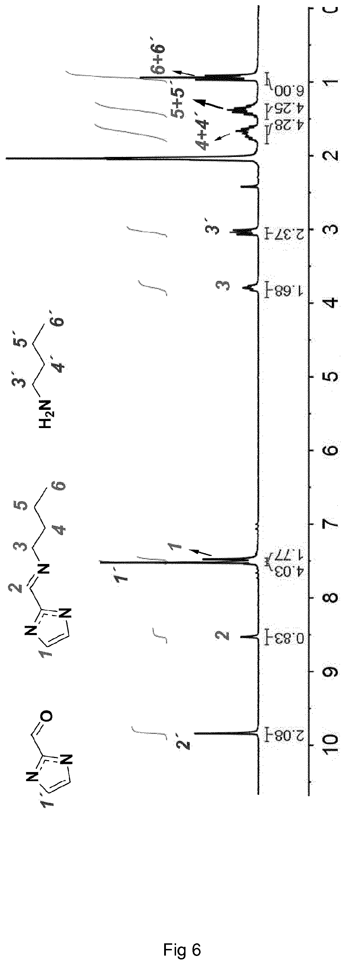

FESEM revealed that initial size and morphology of the parent ZIF-90 crystals did not change during the SD process (Fig. 4), whereas XRPD indicated that all crystalline powders retain the parent sod structure (Fig. 5A). In this case, the formation of imidazol-2-butylmethanimine (IBI) was initially confirmed by FT-IR spectroscopy (Fig. 5B). Two sets of new bands appeared in the IR spectra of the post-synthetic functionalized ZIF-90: a) the band corresponding to the C=N group, centred at ≈ 1644 cm⁻¹, which intensity increased as the equivalents of BA were increased; and b) the aliphatic C-H stretching of the butyl moiety within the 3000-2700 cm⁻¹ range. Moreover, no band corresponding to-NH₂ was observed, indicating that there was no unreacted BA inside the pores of ZIF-90. The formation of imidazol-2-butylmethanimine was further corroborated by the peaks observed in the ¹³C MAS-NMR spectra at 59, 32, 20 and 13 ppm, which were all attributed to the butyl chain (Fig. 5C). The peak at 59 ppm was assigned to the methylene group bonded to imine nitrogen. Moreover, the signal of the aldehyde group was observed at 195 ppm, indicating that not all carbonyl groups were reacted. Finally, the formation of imidazol-2-butylmethanimine was undoubtedly confirmed by identifying it in the solution resulting from dissolving all (ZIF-90-BA)ₓ samples using acetic acid (Fig. 6 shows as illustrative example the ¹H-NMR spectrum of the digested (ZIF-90-BA)₁₅ in CD₃CO₂D). Indeed, ¹H-NMR spectra showed peaks at 8.55 and 3.82 ppm that were attributed to the CH=N imine proton and the N-CH2 methylene protons of IBI, respectively. On the other hand, the peak at m/z = 152.1180 in the ESI-MS spectra, matches with the molecular formula of the protonated IBI [C₈H₁₃N₃]⁺ (m/z = 152.1182) (spectra not shown). Note here that, under these conditions, IBI was also partially hydrolysed.

In order to quantify the conversion efficiency, ¹H-NMR spectra of the digested samples in deuterium chloride (DCI), DMSO-d₆ were collected. Under these stronger acidic conditions, ZIF-90 is dissolved and the released IBI is completely hydrolysed forming imidazole-2-carboxaldehyde (ICA) and BA. Thus, the degree of conversion was measured by comparison of the integration of the peaks at 7.57 and 0.86 ppm corresponding to ICA and BA, respectively. It was found that the conversion efficiency were 25 % for (ZIF-90-BA)₃, 32 % for (ZIF-90-BA)₁₀ and 42 % for and (ZIF-90-BA)₁₅. These results were consistent with the gradual decrease of the S_{BET} values (determined by the N2-sorption isotherms at 77 K) as the conversion efficiency (introduction of more bulky butyl chains) was also increased. The calculated S_{BET} were 670, 483 and 424 m² g⁻¹ for (ZIF-90-BA)₃, (ZIF-90-BA)₁₀, and (ZIF-90-BA)₁₅, respectively. These values corresponded to a loss of 39 %, 45 % and 63 % of the S_{BET} of the parent ZIF-90.

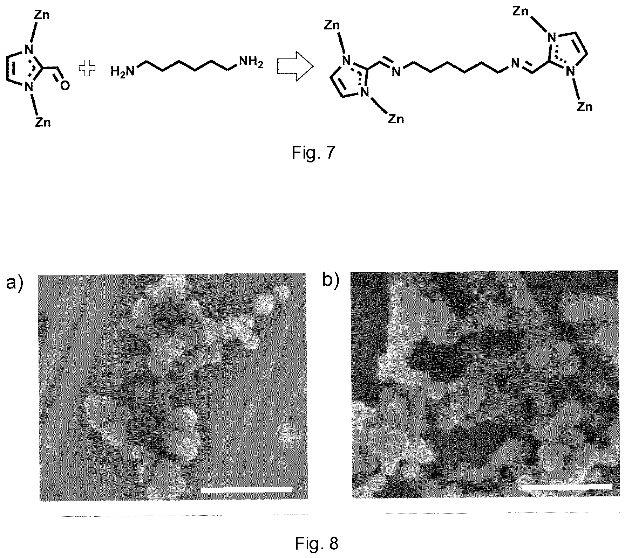

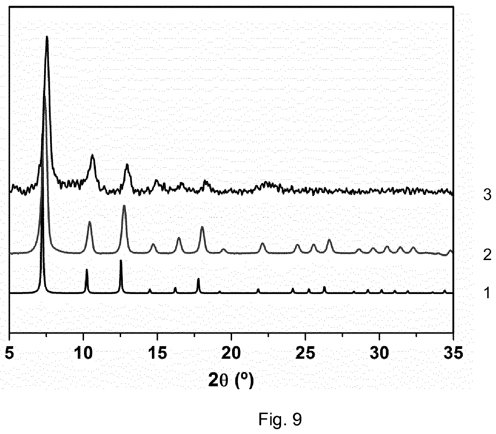

The PSM *via* spray drying by using hexamethylenediamine (HMDA) to crosslink nearby aldehyde groups located on the pores of ZIF-90 (Fig. 7) was further evaluated. Again, no significant change was observed on the crystal size and morphology during the spray drying process (Fig. 8), and the XRPD indicated that the collected crystals retain the parent ZIF-90 structure (Fig. 9).

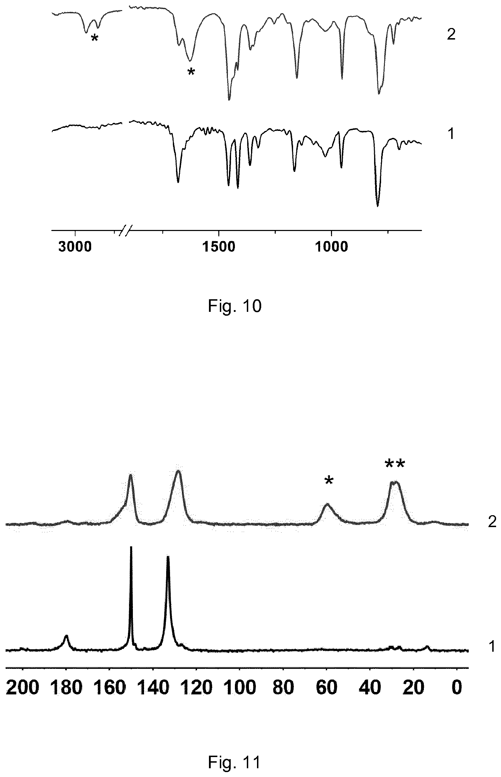

The FT-IR spectrum of (ZIF-90-HMDA)₅ showed the presence of the characteristic C-H stretching bands of the hexamethyl chains at 2930 and 2850 cm⁻¹ as well as a new band centred at 1630 cm⁻¹ corresponding to the C=N group (Fig. 10). Moreover, the absence of the characteristic vibrational bands of the NH₂ groups suggested that both amino groups of the HMDA were reacted. Altogether these observations agree well with an effective crosslinking of the aldehyde groups located on the pores of ZIF-90 using HMDA.

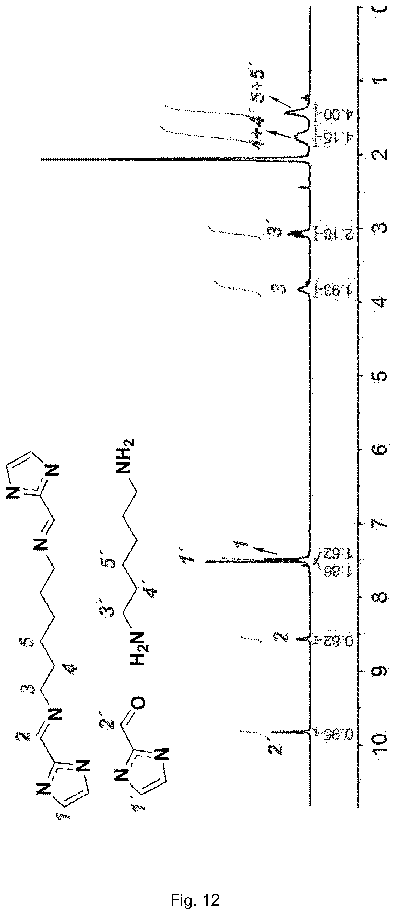

This crosslinking was further studied by ¹³C MAS-NMR. The spectrum of (ZIF-90-HMDA)₅ showed a low intensity of the peak at 179 ppm corresponding to the aldehyde group, suggesting a low concentration of this group within the framework (Fig. 11). This result agrees well with the FT-IR spectrum, in which a low intensity of the band at 1675 cm⁻¹ corresponding to the aldehyde group was also observed (Fig. 10). On the other hand, three signals in the alkyl-region (60, 30 and 27 ppm) were observed, indicating high symmetry in (ZIF-90-HMDA)₅. The downfield signal was attributed to the -N=CH₂-methylene groups, and the other two signals to the four -CH₂- methylene groups of the diimine bridge. In fact, we did not detected the characteristic peak of the -CH₂-NH₂ methylene centred at ≈ 40 ppm, which would indicate that HMDA was only attached by one of its amine groups. The presence of the diimine cross-linking molecule N,N'-(hexane-1,6-diyl)bis(1-imidazol-2-yl)methanimine) was finally confirmed by analysing the solution resulting from the digestion of (ZIF-90-HMDA)₅ in acetic acid by ¹H-NMR (Fig. 12) and ESI-MS (spectrum not shown). The peaks at 8.58 ppm and 3.83 ppm in the ¹H-NMR spectrum were attributed to the CH=N imine proton and the N-CH₂ methylene protons of the diamine molecule, respectively. On the other hand, in the ESI-MS spectra, the peak at m/z = 273.1836 matches with the molecular formula of the protonated N,N'-(hexane-1,6-diyl)bis(1-imidazol-2-yl)methanimine) [C₁₄H₂₀N₆]⁺ (m/z = 273.1822).

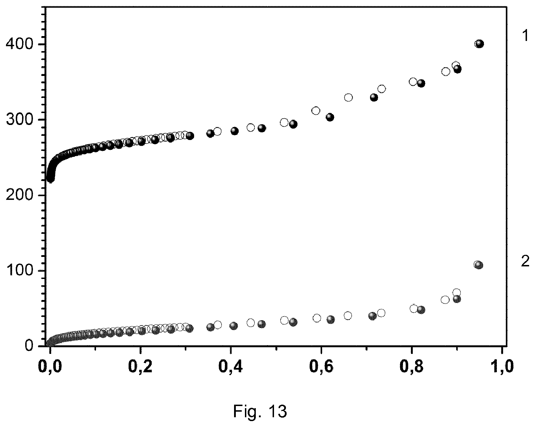

¹H-NMR spectrum of the digested (ZIF-90-HMDA)₅ in strong acidic conditions (DCI, DMSO-d₆) was collected to quantify its yield of conversion (not shown). Comparison of the integration of the signals corresponding to ICA (7.56 ppm) and HMDA (1.30 ppm) revealed that there are 35% of HMDA, meaning that 70% of the ICA linkers were functionalized. This high conversion of cross-linked ICA linkers in (ZIF-90-HMDA)5 should therefore involve a remarkable closure of its pores and reduction of its surface area in comparison to its parent ZIF-90. This assumption was confirmed by measuring the S_{BET} from the N₂-sorption isotherm at 77 K. We found a SBET of 69 m² g⁻¹ that corresponds to a reduction of 93 % of the original S_{BET} of ZIF-90 (Table 2, fig. 13).

**Table 2. BET areas, pore volumes and % of conversion of ZIF-90, (ZIF-90-BA)ₓ and (ZIF-90-HMDA)₅.**

| MOF | x | S_{BET} (m² g⁻¹) | Pore vol. (cm³ g⁻¹)^{a} | Conversion (% molar)^{b} |
|---|---|---|---|---|
| ZIF-90 | | 1070 | 0.4412 | --- |
| (ZIF-90-BA)_{X} | 3 | 670 | 0.3150 | 25 |
| | 10 | 483 | 0.2166 | 32 |
| | 15 | 424 | 0.2042 | 42 |
| (ZIF-90-HMDA)₅ | 5 | 69 | 0.0377 | 70 |

| | | | | |
|---|---|---|---|---|
| ^{a} Calculated at P/P₀ ≈ 0.4. ^{b} Calculated from ¹H-NMR spectra of the digested samples. | | | | |

As shown, efficient crosslinking of the terminal aldehydes groups of ZIF-90 using a diamine molecule was achieved, thereby blocking their porosity and opening up new avenues for future triggered delivery systems

Altogether, the present invention provides highly versatile and effective methodology to post-synthetically modify MOFs, for example, via Schiff-base condensation reactions with radically reduced reaction time, good conversion efficiency and in a continuous way, thus opening new perspectives in organic chemistry synthesis.

### Citation List

Hou, J.; Luan, Y.; Tang, J.; Wensley, A. M.; Yang, M.; Lu, Y. J. Mol. Catal. A: Chem. 2015, v. 407, p. 53
Morris, W.; Doonan, C. J.; Furukawa, H.; Banerjee, R.; Yaghi, O. M. J. Am. Chem. Soc. 2008, v. 130, p. 12626.
Servalli, M.; Ranocchiari, M.; Van Bokhoven, J. A. Chem. Commun. 2012, 48, 1904
EP 2764004
EP16382120

## Claims

1. A process for the covalent post-synthetic modification of metal organic frameworks (MOFs), said process comprising:
(a) spray drying a MOF comprising functional groups and a reagent in the presence of a solvent under conditions appropriate for forming a covalent bond between the functional groups of the MOF and the reagent, and
(b) collecting the modified MOF.

2. The process according to claim 1, wherein the conversion efficiency is at least 10% molar.

3. The process according to claim 2, wherein the conversion efficiency is comprised from 15 to 90% molar.

4. The process according to any of the claims 1-3, wherein:
(i) the MOF to be modified comprises a functional group selected from the group consisting of a primary amine and an aldehyde,
(ii) the reagent is selected from an anhydride, an isocyanate, a isothiocyanate, phosgene, thiophosgene an aldehyde and a primary amine,
(iii) the conditions appropriate for forming a covalent bond between the amine or aldehyde functional group of the MOF and the reagent comprise a temperature comprised from 60 to 200 °C, a molar ratio of amine or aldehyde functional group of the MOF to reagent comprised from 1:1 to 1:50 and a feed rate for spraying the MOF and the reagent comprised from 2 to 4.5 mL/min, and
(iv) the collected modified MOF comprises a group which is an imine, an amide, an urea, a thiourea, an isocyanate, or an isothiocyanate.

5. The process according to any of the claims 1-4, wherein the solvent is selected from the group consisting of CHCl₃, CH₂Cl₂, (C1-C4)-alcohol, tetrahydrofuran (THF), dimethyl formamide (DMF), N,N-diethylformamide (DEF), dimethyl sulfoxide (DMSO) and mixtures thereof.

6. The process according to any of the claims 1-5, wherein the conditions comprise a temperature comprised from 100 to 130 °C.

7. The process according to any of the claims 1-6, wherein the conditions comprise a feed rate for spraying the MOF and the reagent comprised from 3 to 3.5 mL/min.

8. The process according to any of the claims 1-7, wherein the conditions comprise a molar ratio of amine or aldehyde functional group of the MOF to reagent comprised from 1:3 to 1:30.

9. The process according to any of the claims 1-8, wherein the reagent is an aldehyde or an amine, the collected modified MOF comprises a group which is an imine and the conditions appropriate for forming the imine comprise a temperature comprised from 80 to 200 °C, a molar ratio of amine or aldehyde functional group to reagent comprised from 1:1 to 1:30 and a feed rate comprised from 2 to 4.5 mL/min.

10. The process according to claim 9, wherein the solvent is selected from (C1-C4)-alcohol, DMF and mixtures thereof.

11. The process according to any of the claims 9-10, wherein the temperature is comprised from 100 to 150 °C.

12. The process according to any of the claims 9-11, wherein the molar ratio of amine or aldehyde functional group to reagent is comprised from 1:15 to 1:3.

13. The process according to any of the claims 9-12, wherein the feed rate of the mixture is comprised from 2.5 to 3.5 mL/min

14. The process according to any of the claims 1-13, wherein the reaction time is comprised from 0.1 s to 30 s.

15. The process according to claim 14, wherein the reaction time is comprised from from 0.5 s to 5 s.
